# EUROPEAN PATENT APPLICATION

(11) **EP 2 508 734 A2**
(43) Date of publication of application: **10.10.2012**
(21) Application number: 12162347.4
(22) Date of filing: 30.03.2012
(51) Int. Cl.: F02C 7/232, F02C 9/26

(54) **Combustor with integrated control valve system**

(30) Priority: 06.04.2011 RU 2011112991
(71) Applicant: General Electric Company, Schenectady, NY 12345 (US)
(72) Inventor: Usenko, Dmitry Alexandrovich, 107023 Moscow (RU)
(74) Representative: Cleary, Fidelma

(57) **Abstract**

The present application thus provides an integrated fuel control valve system (100) for use with a number of fuel manifolds (70) of a combustor (25). The integrated fuel control valve system (100) may include a main drive system (110), a number of slave drive valves (270) in communication with the fuel manifolds (70), and a number of reverse gear mechanisms (190). Each of the reverse gear mechanisms (190) may be in communication with the main drive system (110) and one of the slave drive valves (270) so as to regulate one of the slave drive valves (270).

## Description

### TECHNICAL FIELD

The present application relates generally to gas turbine engines and more particularly relates to a combustor of a gas turbine engine with an integrated fuel control valve system having one master drive and several driven devices positioned about an end cover thereof.

### BACKGROUND OF THE INVENTION

Generally described, gas turbine engines combust a fuel-air mixture in a number of combustion chambers to release heat energy therein. The heat energy is channeled to a turbine. A central fuel or gas supply is linked to each of the combustion chambers. The central supply delivers an amount of fuel through a supply line that is linked to a common manifold so as to supply all of the combustion chambers. The fuel is mixed with air and ignited in the combustion chamber to form the high temperature gas stream. The turbine converts the thermal energy from the high temperature gas stream to mechanical energy so as to rotate a turbine shaft. The output of the turbine may be used to drive a load such as an electrical generator and other types of applications.

Current gas turbine engine design efforts may focus on incremental improvements in overall system output and efficiency. One possible avenue for increased output and efficiency may be to simplify the electric circuits and control mechanisms that provide the appropriate fuel/air mixtures and splits to the combustion chambers. Such a simplification may reduce overall construction costs and may permit a reduction in, for example, the required starting electrical power and overall operating costs.

There is thus a desire for an improved gas turbine engine design in general and improved fuel-air control systems in specific. Such an improved turbine engine design may provide for simplified controls for the incoming fuel and air flows and modifications thereof. Such an improved design may require fewer parts and may result in an improvement in overall system efficiency with less required maintenance and the like.

### SUMMARY OF THE INVENTION

The present invention resides in an integrated fuel control valve system for use with a number of fuel manifolds of a combustor. The integrated fuel control valve system may include a main drive system, a number of slave drive valves in communication with the fuel manifolds, and a number of reverse gear mechanisms. Each of the reverse gear mechanisms may be in communication with the main drive system and at least one of the slave drive valves so as to regulate at least one of the slave drive valves.

The present invention further resides in a method of providing fuel to a number of fuel nozzles of a combustor. The method may include the steps of mounting a main drive system on an end cover of the combustor, mounting and/or integrating a slave drive valve in communication with each of the number of fuel nozzles, positioning a number of reverse gear mechanisms between the main drive system and the slave drive valves, and operating one or more of the reverse gear mechanisms such that the main drive system regulates one or more of the slave drives valves via rotation of the one or more reverse gear mechanisms.

These and other features and improvements of the present application will become apparent to one of ordinary skill in the art upon review of the following detailed description when taken in conjunction with the several drawings and the appended claims.

### BRIEF DESCRIPTION OF THE DRAWINGS

Embodiments of the present invention will now be described, by way of example only, with reference to the accompanying drawings in which:
Fig. 1 is a simplified schematic view of a known gas turbine engine and the components thereof.
Fig. 2 is a schematic view of a known combustor and an associated fuel distribution system.
Fig. 3 is a perspective view of the end cover of the combustor with a simplified integrated fuel control valve system as may be described herein.
Fig. 4 is a perspective view of a slave control valve as may be used with the integrated fuel valve control system of Fig. 3.
Fig. 5 is a partial perspective view of the integrated fuel control valve system in the reducing flow/closed valve position.
Fig. 6 is a partial perspective view of the integrated fuel control valve system in the neutral position.
Fig. 7 is a partial perspective view of the integrated flow control valve system in the opening flow/opened valve position.
Fig. 8 is a schematic view of the control of the integrated fuel control valve system of Fig. 3.

### DETAILED DESCRIPTION

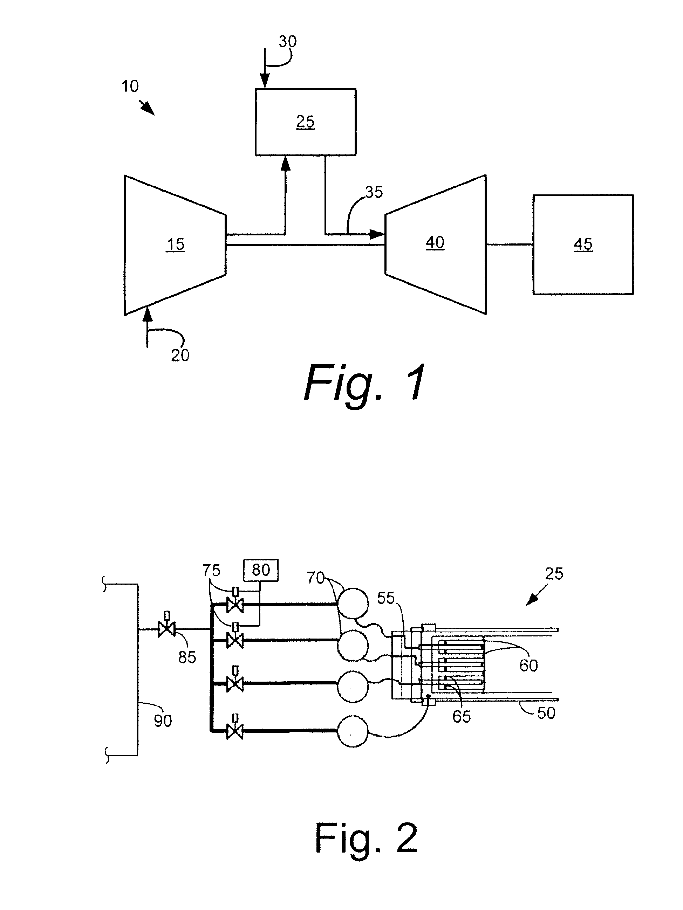

Referring now to the drawings, in which like numerals refer to like elements throughout the several views, Fig. 1 shows a schematic view of gas turbine engine 10 as may be described herein. The gas turbine engine 10 may include a compressor 15. The compressor 15 compresses an incoming flow of air 20. The compressor delivers the compressed flow of air 20 to a combustor 25. The combustor 25 mixes the compressed flow of air 20 with a compressed flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. As described above, the mechanical work produced in the turbine 40 drives the compressor 15 and an external load 45 such as an electrical generator and the like. The gas turbine engine 10 may use natural gas, various types of syngas, and/or other types of fuels. Although the gas turbine engine 10 may be any one of a number of different gas turbine engines offered by General Electric Company of Schenectady, New York and the like, any type gas turbine engine may be used herein. The gas turbine engine 10 may have different configurations and may use other types of components. Other types of gas turbine engines also may be used herein. Multiple gas turbine engines, other types of turbines, and other types of power generation equipment also may be used herein together.

Fig. 2 shows a schematic view of a known combustor 25. In this example, the combustor 25 may be combustor offered by General Electric Company of Schenectady, New York although any type of combustor may be used. Generally described, the combustor may include a combustion chamber 50 enclosed at one end by an end cover 55. A number of fuel nozzles 60 may be mounted on the end cover 55 and extend into the combustion chamber 50. Although in this example six (6) fuel nozzles 60 are used, any number of fuel nozzles 60 may be used herein. A number of fuel pegs 65 also may be positioned about the fuel nozzle 60. Other configurations and other components may be used herein.

The fuel nozzles 60 may be in communication with a number of fuel manifolds 70. Each fuel manifold 70 may be in communication with one or more fuel nozzles 60 depending upon the desired flow conditions therein. Each fuel manifold 70 may be in communication with a gas control valve 75. Each of the gas control valves 75 may be an actuator that precisely controls the flow therethrough. Each gas control valve 75 may be in communication with a control 80. The control 80 provides instructions to the gas control valve 75 based upon a number of sensing devices and other types of operational commands. Each of the control valves 75 may be in communication with a speed ratio valve 85. The speed ratio valve 85 also may be in communication with the control 80. The speed ratio valve 85 controls the flow of fuel from a gas skid 90 and the like. Other types of components and configurations may be used herein to control the delivery of the flow of fuel and the like.

The use of the combustor 25 in the form described herein is by way of example only. Any type of combustor with a number of fuel manifolds 70 and gas control valves 75 and the like may be used herein. Other types of assemblies where flow control is required to and from a number of conduits and the like also may be applicable herein.

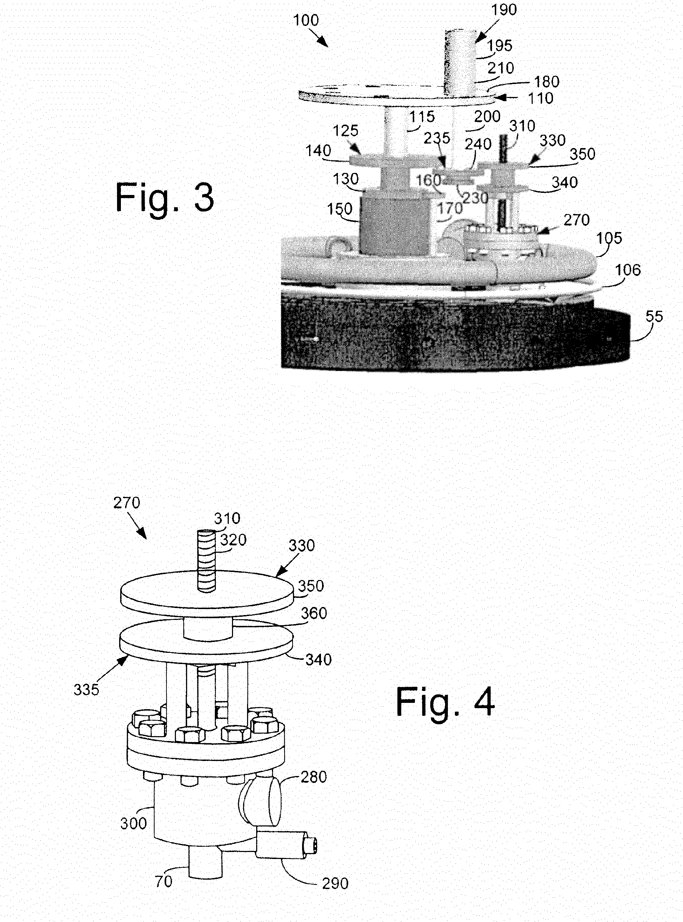

Fig. 3 shows an example of an integrated fuel control valve system 100 as may be described herein. The integrated fuel control valve system 100 may be mounted onto the end cover 55 of the combustor 25 and may be in communication with some or all of the fuel manifolds 70. The integrated fuel control valve system 100 may replace the individual gas control valve 75 on each of the fuel manifolds 70 as was described above and/or other types of fuel input. Rather, an end cover fuel manifold 105 may be mounted onto the end cover 55. The end cover fuel manifold 105 may be in communication with the gas skid 90 or other source of fuel. A purge air manifold 106 also may be mounted onto the end cover 55. Other fuel and air configurations may be used herein.

The integrated fuel control valve system 100 may include a main drive system 110 mounted on a central support 115. The central support 115 may be mounted onto the end cover 55. Positioned about the central support 115 may be a number of main drive pinions 125. In this example, a lower main drive pinion 130 and an upper main drive pinion 140 may be used. Other types and other numbers of main drive pinions 125 also may be used herein. The main drive pinions 125 may be driven by a drive motor 150. Any conventional type of AC or DC based drive motor may be used herein. The drive motor 150 may be in communication with the control 80 or any type of programmable logic device.

A number of reverse drive wheels 160 also may be positioned about the central support 115 on a number of reverse drive wheel shafts 170. The reverse drive wheels 160 may be in communication with the lower main drive pinion 130. If the lower main drive pinion 130 is rotating in a clockwise direction, then the reverse drive wheels 160 will rotate in the opposite counter-clockwise direction. Any number of reverse drive wheels 160 may be used herein. Other components and other configurations of the main drive system 110 may be used herein.

A support spindle 180 also may be attached to the central support 115. The support spindle 180 supports a number of reverse gear mechanisms 190. In this example, the reverse gear mechanism 190 may be in the form of a lathe drive 195. Many other types of reverse gear mechanisms 190 may be used herein. In this example, each reverse gear mechanism 190 may include a drive shaft 200. Each drive shaft 200 may be driven by a positioning device 210 such as a solenoid 220 or other type of electromagnetic drive device so as to raise and lower the drive shaft 200. The positioning device 210 is in communication with the control 80 and the like. Any type of positioning device 210 that provides up and down motion may be used and is included within the scope of the term "reverse gear mechanism" as is used herein. The other end of the drive shaft 200 may have a pair of drive pinions 225 positioned for rotation therewith. In this case, a lower drive pinion 230 and an upper drive pinion 240 may be used. Any number of drive pinions 225 may be used herein. Other components and other configurations may be used herein. For example, various types of gear reversing devices also may be used herein.

The integrated fuel control valve system 100 also may include a number of slave drive valves 270 positioned on the end cover 55. Each slave drive valve 270 may be in communication with the end cover fuel manifold 105 and the purge air manifold 110 as well as with one of the fuel manifolds 70 in communication with the fuel nozzles 60. Each slave drive valve 270 may have an incoming fuel line 280 and an incoming purge air line 290.

As is shown in Fig. 4, each slave drive valve 270 also may have a fuel chamber 300. The fuel chamber 300 may be in communication with the incoming fuel line 280 and the fuel manifold 70. The slave drive valve 270 may have an internal piston 310 positioned within the fuel chamber 300. The internal piston 310 may be sized to fit within the fuel manifold 70 so as to control the flow of fuel therethrough. The other end of the internal piston 310 may have threads 320 thereon. The configuration of the fuel chamber 300 and the internal piston 310 is of conventional design.

The piston 310 of the slave drive valve 270 may communicate with a piston drive system 330. The piston drive system 330 may include a number of piston drive pinions 335, including a lower piston drive pinion 340 and an upper piston drive pinion 350. A threaded collar 360 may be positioned therebetween. Rotation of either the lower piston drive pinion 340 or the upper piston drive pinion 350 thus causes the piston 310 to move upwards or downwards based upon the interaction between the threads 320 of the piston 310 and the threaded collar 360 of the piston drive system 330. Other components and other configurations may be used herein.

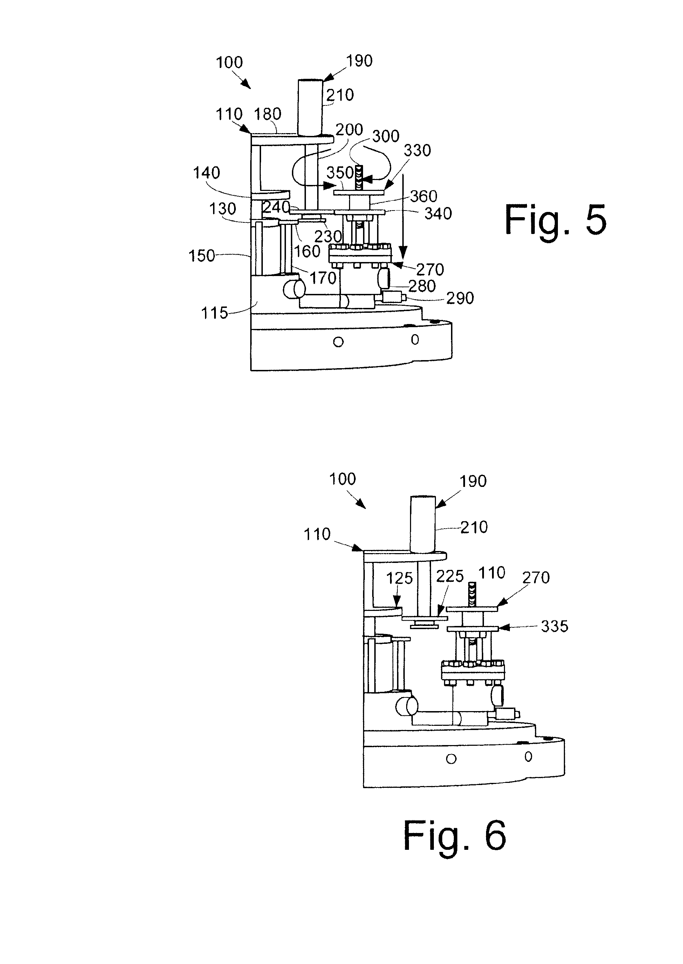

Figs. 5-7 show the operation of the integrated fuel control valve system 100. Specifically, the integrated fuel control valve system 100 operates to open or close the slave drive valves 270 positioned on each manifold 70 of the combustor 25. Fig. 5 shows a reducing flow and/or a closed valve position. The lower main drive pinion 130 of the master drive system 110 rotates in the clockwise direction so as to cause the reverse drive wheel 160 to rotate in a counter-clockwise direction. The drive shaft 200 may be lowered via the positioning device 210 such that the lower drive piston 230 is in communication with the reverse drive wheel 160. The upper drive pinion 240 of the reverse gear mechanism 190 is in contact with the lower piston drive pinion 350 of the piston drive system 300. The upper drive pinion 240 thus causes the piston drive system 330 to rotate in a counter-clockwise direction such that the internal piston 310 of the slave drive valve 270 closes the fuel manifold 70. The directions cited herein are for purposes of reference only. Opposite directions and rotation also may be used herein.

Fig. 6 shows the reverse gear mechanism 190 in a neutral position. In this neutral position, the reverse gear mechanism 190 is not in contact with the master drive system 110 or the slave drive valves 270.

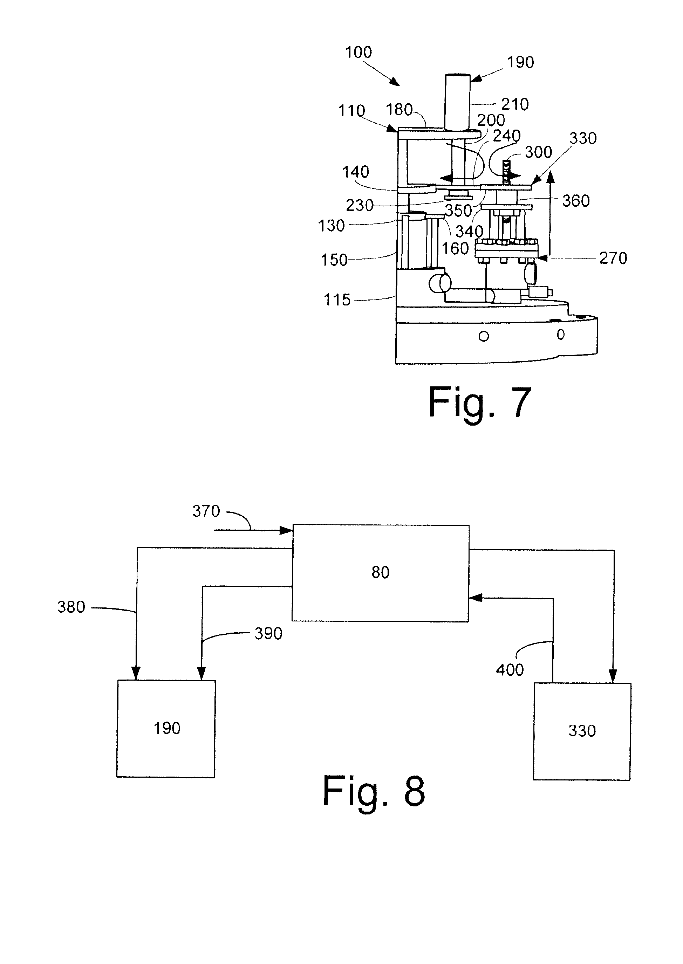

Fig. 7 shows the integrated fuel control valve system 100 in an increasing flow or an opened valve position. In this example, the positioning device 210 of the reverse gear mechanism 190 raises the drive shaft 200 such that the upper drive pinion 240 is driven by the upper main drive pinion 140 of the master drive system 110. Again, if the main upper drive pinion 140 is rotating in the clockwise direction, the upper drive pinion 240 will rotate in the counter-clockwise direction. The upper drive pinion 240 of the reverse gear mechanism 190 is in contact with the upper piston drive pinion 350 of the piston drive system 330 of the slave drive valve 270. The counter-clockwise rotation of the upper drive pinion 240 causes the upper piston drive pinion 350 to rotate in the clockwise direction such that the internal piston 310 rises due to the interaction between the threads 320 and the threaded collar 360, thus opening the fuel manifold 70.

The integrated fuel control valve system 100 thus provides a simplified control system in that only one master drive 110 may be used with any number of slave drive valves 270. Likewise, the controls required herein are simplified. Specifically, the control 80 need only command the drive motor 150 of the master drive system 110 to turn on or off. Further, the control 80 only needs to command the positioning device 210 of each reverse gear mechanism 190 to position the drive shaft 200 in the closed, neutral, or open position. The integrated fuel control valve system 100 thus may individually open and close or otherwise regulate each of the fuel nozzles 60 in an efficient and simplified manner.

Fig. 8 is a schematic view of the operation of the gear reversing mechanism via the control 80. In response to a change position signal 370 (analog), the control 80 provides the reverse gear mechanism 190 with either a raise signal 380 or a lower signal 390 (Boolean - normally off) to a closed or open position. The duration of this signal is defined from a piston position feedback signal 400 (analog) to the control 80. When the piston achieves the requested position signals 380, 390, the drive shaft 200 returns to the neutral position automatically. Other configurations and other configurations may be used herein.

The integrated fuel control valve system 100 avoids the multiple actuators found in the known gas control valves 75. Each integrated fuel control valve system 100 may be switched on by sequence as opposed to simultaneously so as to reduce overall starting electrical power. Similar types of integrated fuel valve systems may be used with the purge air manifold 260. Any type of desired fuel split may be provided to the combustor 25.

It should be apparent that the foregoing relates only to certain embodiments of the present application and that numerous changes and modifications may be made herein by one of ordinary skill in the art without departing from the general spirit and scope of the invention as defined by the following claims and the equivalents thereof.

## Claims

1. An integrated fuel control valve system (100) for use with a number of fuel manifolds (70) of a combustor (25), comprising:
a main drive system (110);
a plurality of slave drive valves (270);
wherein each of the plurality of slave drive valves (270) is in communication with one of the number of fuel manifolds (70); and
a plurality of reverse gear mechanisms (190);
wherein each of the plurality of reverse gear mechanisms (190) is in communication with the main drive system (110) and one of the plurality of slave drive valves (270) so as to regulate the one slave drive valve (270).

2. The integrated fuel control valve system (100) of claim 1, wherein each of the number of fuel manifolds (70) is in communication with a fuel nozzle (60).

3. The integrated fuel control valve system (100) of claim 1 or 2, wherein the plurality of slave drive valves (190) is in communication with an end cover fuel manifold (105).

4. The integrated fuel control valve system (100) of claim 1, 2 or 3 wherein the main drive system (110) comprises one or more main drive pinions (125) in communication with a drive motor (150).

5. The integrated fuel control valve system (100) of claim 4, wherein the main drive system (110) comprises one or more reverse drive wheels (160) driven by the one or more main drive pinions (125).

6. The integrated fuel control valve system (100) of any one of claims 1 to 5, wherein the plurality of reverse gear mechanisms (190) comprises a shaft (200) and a positioning device (210).

7. The integrated fuel control valve system (100) of claim 6, wherein the plurality of reverse gear mechanisms (190) comprises one or more drive pinions (225) positioned on the shaft (200) for communication with the main drive system (110) and the plurality of slave drive valves (270).

8. The integrated fuel control valve system (100) of any preceding claim, wherein the plurality of slave drive valves (270) comprises a fuel chamber (300) in communication with one of the number of fuel nozzles (60).

9. The integrated fuel control valve system (100) of claim 8, wherein the plurality of slave drive valves (270) comprises a piston (310) positioned within the fuel chamber (300).

10. The integrated fuel control valve system (100) of claim 9, wherein the plurality of slave drive valves (270) comprises a piston drive system (330) in communication with the piston (310) and one of the plurality of reverse gear mechanisms (190).

11. The integrated fuel control valve system (100) of claim 10, wherein the piston drive system (330) comprises one or more piston drive pinions (335) attached to the piston (310) via a collar (360).

12. The integrated fuel control valve system (100) of any preceding claim, wherein the main drive system (110) is mounted on an end cover (55) of the combustor (25).

13. The integrated fuel control valve system (100) of any preceding claim, further comprising a control (80) in communication with the main drive system (110) and the plurality of reverse gear mechanisms (190).

14. A method of providing fuel to a number of fuel nozzles (60) of a combustor (25), comprising:
mounting a main drive system (110) on an end cover (55) of the combustor (25);
mounting a slave drive valve (270) in communication with each of the number of fuel nozzles (60);
positioning a plurality of reverse gear mechanisms (190) between the main drive system (110) and the slave drive valves (270); and
operating one or more of the plurality of reverse gear mechanisms (190) such that the main drive system (110) regulates one or more of the slave drive valves (270) via rotation of the one or more reverse gear mechanisms (190).
